Europäisches Patentamt

European Patent Office

Office européen des brevets

(19)

(11) Veröffentlichungsnummer: **0 010 604**
**B1**

(12) **EUROPÄISCHE PATENTSCHRIFT**

(45) Veröffentlichungstag der Patentschrift: **03.11.82**

(21) Anmeldenummer: **79103481.2**

(22) Anmeldetag: **17.09.79**

(51) Int. Cl.³: **G 03 B 27/62,**
**G 03 G 15/00**

(54) Durchlaufkopiergerät.

(30) Priorität: **05.10.78 DE 2843522**

(43) Veröffentlichungstag der Anmeldung:
**14.05.80 Patentblatt 80/10**

(45) Bekanntmachung des Hinweises auf die Patenterteilung:
**03.11.82 Patentblatt 82/44**

(84) Benannte Vertragsstaaten:
**BE CH FR GB IT NL**

(56) Entgegenhaltungen:
**CH - A - 442 987**
**DE - A - 1 797 416**
**DE - A - 1 947 877**
**DE - B - 1 522 161**
**DE - C - 2 026 065**
**US - A - 3 689 141**
**US - A - 3 909 128**

(73) Patentinhaber: **AGFA-GEVAERT Aktiengesellschaft**
**D-5090 Leverkusen 1 (DE)**

(72) Erfinder: **Massengeil, Hans A.**
**Isartalstrasse 45a**
**D-8000 München 5 (DE)**
Erfinder: **Böck, Georg**
**Untere Weiden-Strasse 19**
**D-8000 München 90 (DE)**
Erfinder: **Steinlehner, Fritz**
**Am Blankstadl 4**
**D-8000 München 90 (DE)**

EP 0 010 604 B1

Durchlaufkopiergerät

Die Erfindung betrifft ein Durchlaufkopiergerät, bei welchem die von Transportwalzenpaaren über ein streifenförmiges Belichtungsfenster geförderte Vorlage auf einen während der Belichtung mit der Transportgeschwindigkeit der Vorlage entsprechender Geschwindigkeit bewegten Aufzeichnungsträger abgebildet wird, mit einem vor dem Belichtungsfenster angeordneten Einzugswalzenpaar und einem nach dem Belichtungsfenster angeordneten Auszugswalzenpaar für die Vorlage, wobei die Transportwalzenpaare jeweils von einer gerätefest und einer beweglich gelagerten, in Arbeitsstellung unter Feder- oder Gewichtswirkung der gerätefest gelagerten Walze anliegenden Walze gebildet werden.

Es ist das Ziel der Erfindung, eine Einrichtung dieser Art zu schaffen, welche Vorlagen verschiedener Dicke störungsfrei transportieren und abbilden kann. Insbesondere soll vermieden werden, daß im Falle dickerer, z.B. aus Packpapier oder Pappe bestehender Vorlagen in dem Augenblick ein Einlaufstoß entsteht, in welchem die Vorlage von dem hinter dem Belichtungsfenster angeordneten Ausführwalzenpaar erfaßt wird. Ein solcher Einlaufstoß am zweiten Walzenpaar stört in aller Regel den zu diesem Zeitpunkt bereits in Gang befindlichen Abbildungsvorgang und führt zu einer stellenweise verwischten oder verwackelten Abbildung.

Erfindungsgemäß bilden nun die Achsen der beweglichen Walzen des jeweiligen Walzenpaares jeweils die Koppelgelenke eines Vierlenkgetriebes mit der Vorlagentransportebene etwa parallelem Koppelglied, die Kurbeln des Vierlenkgetriebes sind unter einem spitzen Winkel gegen die Einlaufrichtung der Vorlage geneigt, und an der Einzugswalze greift eine im wesentlichen parallel zu der dieser Walze zugeordneten Kurbel verlaufende Andruckkraft für die Einzugswalze an. Zweckmäßig wirkt auf die Einzugswalze mindestens eine Feder ein, deren Federcharakteristik einen ausreichend steilen Verlauf hat, um auf den durch das Einlaufen verschieden dicker Vorlagen unter der Einzugswalze bedingten Unterschied im Federweg einen in der Größenordnung der Walzenandruckkraft, die dann vorhanden ist, wenn sich keine Vorlage unter der Einzugswalze befindet, liegenden Unterschied in der Federkraft zu erzeugen.

Bei dieser Anordnung hängt die zwischen den Auszugswalzen wirkende Andruckkraft aufgrund der durch das Viergelenkgetriebe hergestellten Kupplung mit der Einzugswalze von der Dicke der von der Einzugswalze erfaßten Vorlagen ab, weil die durch das Einlaufen einer dickeren Vorlage bedingte Erhöhung des Walzenandruckes an der Einzugswalze sich über das Koppelglied des Viergelenkgetriebes der Andruckvorrichtung der Auszugswalze mitteilt und dort zu einer entsprechenden Reduzierung oder sogar völligen Aufhebung des Walzenandruckes führt. Bei entsprechender Auslegung der Federkräfte und -wege an der Einzugs- und an der Auszugswalze sowie der Neigungswinkel der diesen Walzen zugeordneten Kurbeln gegenüber der Einlaufrichtung der Vorlage läßt sich dabei erreichen, daß sowohl dünne und normale, z.B. aus Durchschlagpapier mit etwa 40—80 gr/qm oder aus normalem Schreibmaschinenpapier mit etwa 80—100 gr/qm bestehende Schriftstücke, als auch dickere, z.B. auf dickem Schreibpapier oder dünnem Karton mit etwa 100—250 gr/qm aufgezeichnete Vorlagen sowohl von den Einzugs- als auch von den Auszugswalzen sicher erfaßt werden und nach dem Vorbeigang ihrer Vorderkante an den Einzugswalzen stoßfrei unter die Auszugswalzen einlaufen.

Ein weiterer Vorteil der erfindungsgemäßen Anordnung besteht auch noch darin, daß die reduzierte Andruckkraft der Auszugswalzen in dem Augenblick auf ihren Normalwert zurückgeführt wird, in welchem die hintere Vorlagenkante die Einzugswalzen passiert hat. Dadurch ist es möglich, die Andruckkraft der Auszugswalzen im Falle dicker, steifer Vorlagen, welche auch von der Einzugswalze allein über das Belichtungsfeld geschoben werden können, beliebig zu reduzieren oder diese Walzen sogar ganz abheben zu lassen und die volle Förderwirkung bzw. eine verstärkte Andruckkraft der Auszugswalzen genau in dem Augenblick wieder einsetzen zu lassen, in welchem die Hinterkante der Vorlage von den Einzugswalzen freigegeben wird.

Neben dem Einlaufstoß an der Auszugswalze kann aber auch der Einlaufstoß an der Einzugswalze auch im Falle dickerer Vorlagen völlig vermieden werden, wenn gemäß einem weiteren vorteilhaften Merkmal der Erfindung die auf die Einzugswalze wirdende Feder mittels eines Betätigungsmagneten spannbar ist. Es ist dann möglich, die Einzugswalze erst nach dem Einführen bzw. Einlaufen der ersten Vorlagenkante unter diese Walze zu schließen.

Grundsätzlich könnten die auf die Einzugswalze wirkenden Federn direkt an der Walzenachse angreifen, welche in diesem Fall etwa parallel zu der ihr zugeordneten Kurbel verschieblich gelagert sein müßte. Vorzugsweise ist aber die Kurbel der Einzugswalze an einem im wesentlichen senkrecht zu dieser Kurbel verlaufenden Schwenkhebel angelenkt, an welchem die die Andruckkraft für die Einzugswalze liefernde Feder angreift, und es ist eine entgegen der Walzenandruckrichtung auf die Kurbel bzw. auf den Schwenkhebel einwirkende Rückholfeder vorgesehen, welche die Walzen nach dem Abschalten des Betätigungsmagneten in einfacher und betriebssicherer Weise wieder trennt. Zweckmäßig ist dabei ein die Abschwenkbewegung der Einzugswalze begrenzender, mit dem Schwenkhebel zusammenwirkender Anschlag vorgesehen. Bei dieser bevorzugten Ausführungsform bilden die der Walzenzustellung dienenden Getriebeglieder ein Fünfgelenkgetriebe mit zwei Koppelgliedern und zwei am Gestell gelagerten, angetriebenen Kurbeln.

Zweckmäßig ist ferner in die Kraftübertragungskette zwischen dem Betätigungsmagneten und der Kurbel ein Übertragungshebel eingeschaltet, dessen Drehpunkt in einer zur Kraftübertragungsrichtung im wesentlichen parallelen Richtung verschiebbar ist, und an welchem die ankommende und die weiterzuleitende Kraft an verschiedenen Punkten des Hebels angreift. Mit dieser Anordnung kann die Andruckkraft an der Einzugswalze trotz des geringen Federweges der relativ steifen Andruckfeder sowohl bei der Gerätefertigung als auch bei der späteren Wartung und beim Betrieb des Gerätes entsprechend den jeweiligen Erfordernissen genau eingestellt werden. Die Notwendigkeit zur Einhaltung übermäßig genauer Fertigungstoleranzen wird dadurch vermieden.

Nach einer bevorzugten Ausführungsform der Erfindung wird die Kurbel der Einzugswalze von zwei an den beiden Walzenenden angelenkten Kurbelteilen gebildet, und als Andruckfeder für die Einzugswalze dient eine diese Kurbelteile verbindende Achse, in deren Mitte ein mittels eines Betätigungsmagneten verschwenkbarer Schwenkhebel befestigt ist. Auf diese Weise können mit einfachen Mitteln beliebig steife Federn in die Kraftkette der Andruckvorrichtung für die Einzugswalze eingeschaltet werden. Zusätzlich oder stattdessen kann auch noch die Achse des etwa in der Mitte zwischen den Kurbelteilen angeordneten Schwenkhebels in Platinen gelagert sein, welche etwa in der Ebene dieser Kurbelteile verlaufen.

In weiterer Ausgestaltung der Erfindung ist der die Andruckfeder der Einzugswalze spannende Elektromagnet in Abhängigkeit zum Kopierzyklus des Gerätes steuerbar. Ferner steuert ein zwischen der Einzugswalze und einem in Transportrichtung der Vorlagen gesehen hinter der Einzugswalze liegenden Papieranschlag angeordneter Papierfühler den die Andruckfeder spannenden Elektromagneten und ggf. auch den Kopierzyklus der Gerätes. Vorteilhaft ist der in die Transportbahn der Vorlage schwenkbare Papieranschlag auf der Achse der Einzugswalze gelagert und liegt unter Federkraft oder Gewichtswirkung mit einer zwischen seiner Lagerachse und der Anschlagkante des Papieranschlages angeordneten Anschlagnase einem neben der Vorlage liegenden Stück der Vorlagentransportbahn auf.

Auf diese Weise braucht in der Bereitschaftsstellung des Gerätes die Vorlage lediglich unter die etwas von ihrer Gegenwalze abgehobene Einzugswalze geschoben und an den in die Transportbahn eingeschwenkten Anschlag angelegt werden, um über den vor diesem Anschlag angeordneten Papierfühler das Schließen der Einzugswalze und den Beginn des Kopierzyklusses in Gang zu setzen. Der am abschwenkbaren Träger der Einzugswalze gelagerte Papieranschlag entfernt sich dabei in besonders einfacher Weise selbsttätig beim Schließen der Einzugswalze aus der Vorlagentransportbahn.

In der Zeichnung sind einige Ausführungsformen der Erfindung beispielsweise dargestellt: Dabei zeigt

Figur 1 einen Schnitt durch das erfindungsgemäße Gerät mit in Bereitschaftsstellung befindlichen Einzugs- und Auszugswalzen für die Vorlage sowie ein Blockschaltbild der Gerätesteuerung,

Figur 2 das Gerät mit geschlossenen Einzugs- und Auszugswalzen,

Figur 3 das Gerät mit geöffneter Vorlagentransporteinrichtung,

Figur 4 eine andere Ausführungsform der Andruckeinrichtung für die Einzugswalze,

Figur 5 einen Schnitt durch das Gerät gemäß Figur 4 entlang der Linie V—V in Figur 4, und

Figur 6 ein Diagramm der gegenseitigen Abhängigkeit der Andruckkräfte an der Einzugs- und Auszugswalze sowie der Abhängigkeit dieser Kräfte von der Vorlagendicke.

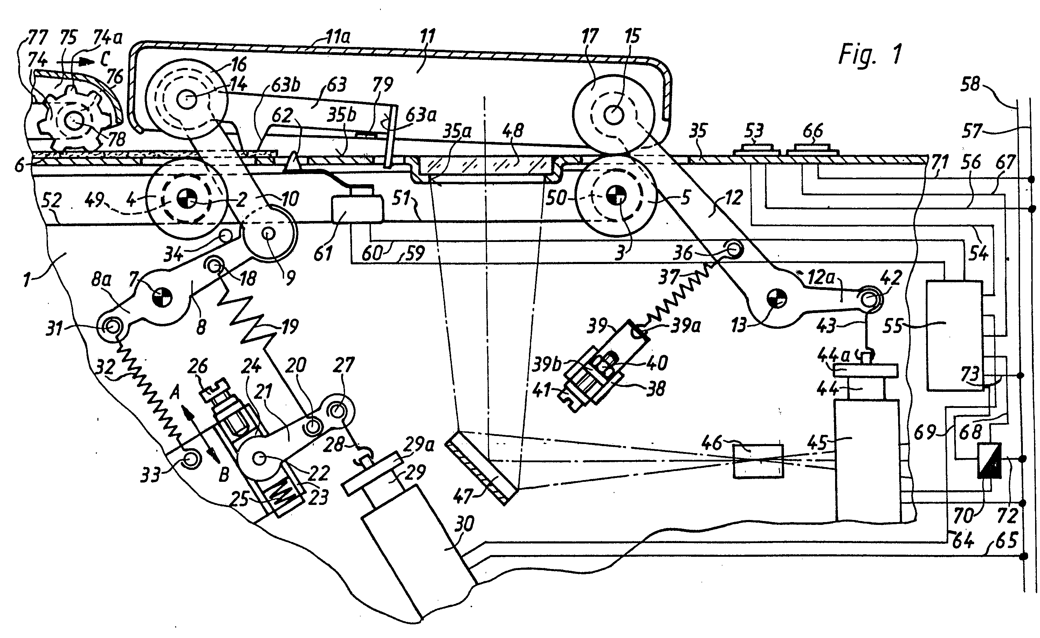

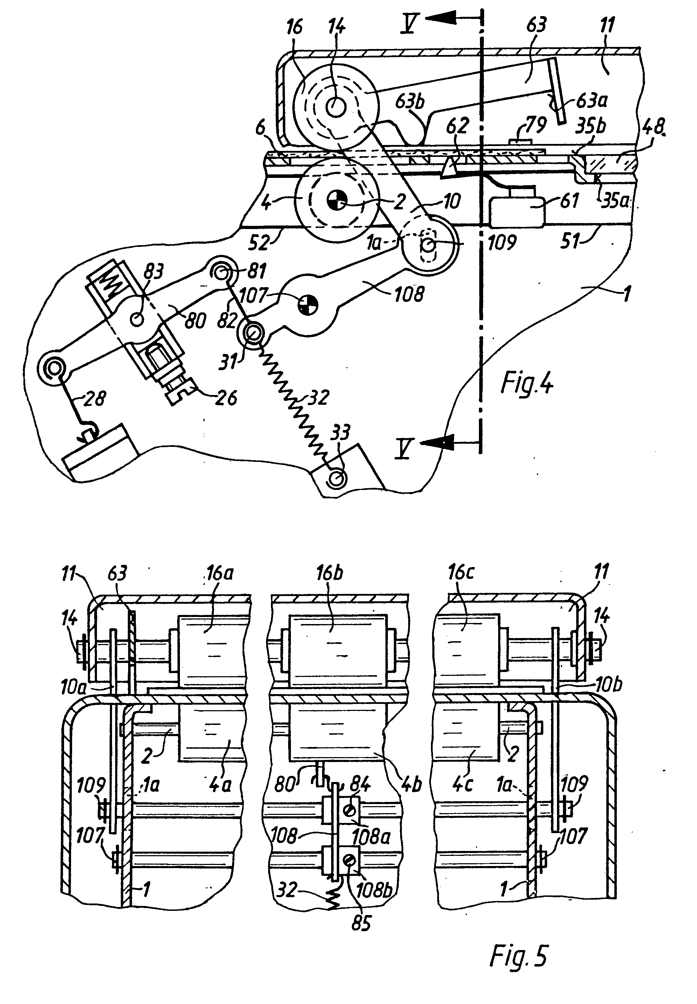

In Figur 1 sind in einem Gerätegestell 1 die gerätefesten Achsen 2 und 3 einer Walze 4 und einer Walze 5 für eine abzubildende Vorlage 6 gelagert. An einer weiteren gerätefesten Achse 7 ist ein Schwenkhabel 8 gelagert, welcher eine Achse 9 trägt. An der Achse 9 ist die Kurbel 10 eines vom einem Koppelglied 11 und Kurbeln 10 und 12 gebildeten Viergelenkgetriebes angelenkt. Die Kurbel 12 dieses Vierlenkgetriebes ist an einer gerätefesten Achse 13 gelagert. Die Koppelgelenke des Getriebes werden von Achsen 14 und 15 gebildet, von denen die Achse 14 die Lagerachse für die Einzugswalze 16 und die Achse 15 die Lagerachse für die Auszugswalze 17 der Walzenpaare 4, 16 und 5, 17 bildet, wobei an jedem Achsenende je ein Kurbelteil 10a, 10b (Fig. 5) bzw. 12a, 12b (nicht dargestellt) der Kurbel 10 bzw. 12 angelenkt ist. Das Koppelglied 11 ist als mit einer Deckplatte 11a ausgestattetes, größtenteil geschlossenes Gehäuse für die schwenkbaren Walzen 16 und 17 ausgeführt.

An einem Stift 18 des Schwenkhebels 8 greift eine Zugfeder 19 mit relativ steiler Federcharakteristik an. Das andere Ende der Zugfeder 19 ist an einem Stift 20 eines Schwenkhebels 21 eingehängt. Der Schwenkhebel 21 ist auf einer Achse 22 gelagert, welche an einem in einem Führungsteil 23 verschiebbaren Schlitten 24 befestigt ist. Der Schlitten 24 wird mittels einer Druckfeder 25 gegen eine Einstellschraube 26 gedrückt. Dadurch kann die Lage der Achse 22 in einstellbarer Weise in Zugrichtung der Feder 19 verstellt werden.

Der Schwenkhebel 21 trägt noch einen weiteren Einhängestift 27, welcher mittels einer Zugstange 28 mit dem Anker 29 eines Elektromagneten 30 verbunden ist. Der Zuganker 29 weist einen Bund 29a auf, welcher zusammen mit der Oberkante 30a des Magneten 30 einen festen Anschlag für den Zuganker 29 bildet.

An einem Arm 8a des Schwenkhebels 8 ist ein Stift 31 befestigt, an welchem eine Zugfeder 32 eingehängt ist. Das andere ...

Ende der Zugfeder 32 ist an einem gerätefesten Stift 33 befestigt. Die Zugfeder 32 zieht den Schwenkhebel 8 so lange gegen einen gerätefesten Anschlagstift 34, bis die Feder 19 mittels des Magneten 29, 30 gespannt wird. In diesem Fall wird, da die Feder 19 wesentlich stärker als die Feder 32 ausgeführt ist, der Schwenkhebel 8 so weit nach unten gezogen, bis die Walze 16 dem als Führungsbahn für die Vorlage 6 ausgebildeten Oberteil 35 des Gerätes bzw. der Vorlage 6 anliegt.

Durch entsprechende Einstellung der Einstellschraube 26 bzw. durch Verschieben des Drehpunktes 22 in Pfeilrichtung A—B kann erreicht werden, daß die Feder 19 in dem Augenblick die normale Andruckkraft für die Walze 16 erzeugt, in welchem diese Walze die nicht mit einer Vorlage 6 belegte Oberfläche der Walze 4 berührt. Die Einstellung der Andruckkraft erfolgt dabei durch Verkürzung bzw. Verlängerung der Kraftkette zwischen dem Magneten 29, 30 und dem Schwenkhebel 8 aufgrund der durch Verschieben des Drehpunktes 22 bewirkten relativen Verschiebung der Stifte 20 und 27 in Zugrichtung der Feder. Die Charakteristik der Feder 19 ist so ausgelegt, daß nach dem Einlaufen einer dicken Vorlage unter die Einzugswalze 16 und dem dadurch bedingten Anheben dieser Walze sich die Kraft der Feder in dem Maße erhöht, wie es für das im folgenden noch näher beschriebene Reduzieren der Andruckkraft der Walze 17 erforderlich ist.

Die Andruckkraft für die Auszugswalze 17 wird dadurch erzeugt, daß an einem Stift 36 der Kurbel 12 eine Feder 37 eingehängt ist, deren anderes Ende an einem hochgebogenen Lappen 39 a einer in einer Führung 38 längsverschieblichen Lasche 39 eingehängt ist. Durch je einen hochgebogenen Lappen 38 a der Führung 38 und 39 b der Lasche 39 bzw. eine der Lasche 39 b anliegende Mutter 40 ist eine Stellschraube 41 geschraubt, mittels welcher die Feder 37 gespannt werden kann. Auf diese Weise ist es möglich, die Ausgangsspannung der Andruckfeder 37 zu regulieren.

Zum Abschwenken der Auszugswalze 17 ist an einem Stift 42 eines Arms 12 a der Kurbel 12 eine Zugstange 43 eingehängt, welche diesen Stift mit dem Zuganker 44 eines Magneten 45 verbindet. Auch hier bildet wieder ein Bund 44 a des Zugankers 44 zusammen mit der Oberkante des Magneten 45 einen festen Anschlag für den Zuganker 44. Durch Betätigung des Magneten 44, 45 wird die Kurbel 12 soweit verschwenkt, daß neben der Walze 17 durch Vermittlung des Koppelglieds 11 auch die Walze 16 noch weiter von ihrer Unterlage abgehoben und über den Anschlag 79 auch die Anschlagskante 63 a aus der Vorlagentransportbahn entfernt wird.

Zur Abbildung der Vorlage 6 auf den nicht dargestellten Aufzeichnungsträger ist ein Abbildungsobjektiv 46 vorgesehen, welches ein im Geräteoberteil 35 ausgebildetes Belichtungsfenster 35 a in bekannter Weise auf den bewegten Aufzeichnungsträger abbildet. Im Bereich des Bildfensters 35 a ist in die Deckplatte 35 zur Führung der Vorlage 6 eine transparente Auflageplatte 48 eingelegt. Während des Transportes der Vorlage 6 über das Belichtungsfenster 35 a werden die gerätefest gelagerten Walzen 4 und 5 mittels über Schnurrollen 49 und 50 gelegter Pesen 51 und 52 mit einer der Geschwindigkeit der Oberfläche des Aufzeichnungsträgers unter Berücksichtigung des Abbildungsmaßstabes proportionalen Geschwindigkeit angetrieben.

Der Kopiervorgang wird mittels eines Kopierschalters 53 eingeleitet, welcher mittels einer Leitung 54 mit einer zentralen Steuereinheit 55 verbunden ist. Ein weiterer Leiter 56 verbindet den Kopierschalter 53 mit einem Leiter 57 einer Netzleitung 57, 58. Die zentrale Steuereinheit 55 ist mittels weiterer Leitungen 59 und 60 mit einem Mikroschalter 61 verbunden, dessen Fühler 62 in die Bahn der Vorlage 6 ragt.

In dem in Figur 1 dargestellten Ausgangszustand ragt außerdem auch noch die Anschlagskante 63 a eines auf der Achse 14 gelagerten Papieranschlages 63 in diese Transportbahn. Der Papieranschlag 63 weist eine Anschlagsnase 63 b auf, welche an einer neben der Vorlagentransportbahn gelegenen Stelle dem Geräteoberteil 35 aufliegt. Dadurch, daß die Anschlagsnase 63 b zwischen der Papieranschlagskante 63 a und der Achse 14 liegt, bewegt sich die Anschlagskante 63 a in dem Augenblick nach oben, in welchem sich die Einzugswalze 16 mit ihrer Achse 14 nach unten absenkt. Der Anschlag 63 a wird also mit dem Absenken der Walze 16 bzw. mit dem Schließen des Einzugswalzenpaares 4, 16 selbsttätig aus dem Weg der Vorlage 6 entfernt. Mittels eines Anschlages 79 wird der Papieranschlag 63 a auch dann aus dem Weg der Vorlage 6 entfernt, wenn das Koppelglied 11 soweit angehoben ist, daß beide Walzenpaare 4, 16 und 5, 17 geöffnet sind.

Die zentrale Steuereinheit 55 ist so ausgelegt, daß sie durch Drücken der Taste des Kopierschalters, 53 die Kopierbereitschaft des Gerätes herstellt. Wird nun eine Vorlage 6 unter der Walze 16 in Richtung auf den Papieranschlag 63 a eingeführt, so wird der Mikroschalter 61, 62 betätigt, wodurch die zentrale Steuereinheit 55 den Kopierzyklus des Gerätes einleitet und dabei auch über eine Leitung 64 den Magneten 29, 30 zum Schließen des Einzugswalzenpaares 4, 16 ansteuert. Eine weitere Leitung 65 verbindet den Magneten 30 mit dem Netzleiter 58, wodurch der Stromkreislauf des Magneten geschlossen wird.

Falls während des Kopiervorganges beim Durchlauf der Vorlage durch die Belichtungsstation eine Störung eintritt, durch welche die Gefahr einer Beschädigung der Vorlage entsteht, kann durch Drücken eines weiteren am Oberteil 35 angebrachten Schalters 66, welcher mittels einer Leitung 67 mit der zentralen Steuereinheit 55 verbunden ist, das sofortige Öffnen beider Walzenpaare 4, 16 und 5, 17 eingeleitet werden. Die zentrale Steuereinheit steuert dann über eine Leitung 68, in welche ein Halterelais 70 eingeschaltet ist, den Magneten 44, 45 an, welcher die an der Kurbel 12 gelagerten Auszugswalzen 17 entgegen der Wirkung der Rückholfeder 37 von ihrer Gegenwalze 5 abschwenkt. Über das Koppelglied 11 wird dabei auch die Kurbel 10 im Uhrzeigersinn verschwenkt, wodurch sich auch das Einzugswalzenpaar 4, 16 öffnet. Zur Schließung der Stromkreise sind durch den Schalter 66 das Halterelais 70 über Leigungen 71 und 72 mit dem Netzleiter 58 verbunden. Ein weiterer Netzleiter 73 verbindet die zentrale Steuereinheit 55 mit diesem Netzleiter. Eine das Relais 70 mit der Steuereinheit 55 verbindende Leitung 69 stellt den Haltestromkreis dieses Relais dar, welcher bei erneuter Betätigung des Kopierschalters 53 geöffnet wird.

Bei geöffneten Einzugs- und Auszugswalzen ist nicht nur die Vorlage vor Beschädigungen geschützt und kann zu ihrer Sicherstellung von Hand dem Gerät entnommen werden. Es ist in dieser Lage auch möglich, eine bandförmige, sogenannte Endlosvorlage unter die Transportrollen einzuführen und so lange zu verschieben, bis die Stelle, mit deren Ablichtung begonnen werden soll, vor dem Belichtungsfenster 35 a zu liegen kommt.

Ein erneutes Drücken der Taste des Kopierschalters 53 bringt die Walzen wieder in die in Figur 1 dargestellte Ausgangsstellung, in welcher der nächste Kopierzyklus, wie geschildert, mittels des Papierfühlers 62 eingeleitet werden kann.

Speziell zum Kopieren von sogenannten Endlosformularen enthält die zentrale Steuereinheit 55 auch noch Schaltungselemente, welche bewirken, daß die Walzen 16 und 17 von der Vorlage abgeschwenkt werden, falls sich nach dem Ende eines normalen, durch die Länge des verwendeten Kopierpapiers gegebenes Kopierzyklusses noch ein Teil der Vorlage über dem Papierfühler 62 befindet. Schiebt man nun bei geöffneten Walzenpaaren 4, 16 und 5, 17 die Vorlage 6 entgegen der Transportrichtung C um die Breite des Belichtungsfensters 35 a zurück und betätigt daraufhin wieder den Kopierschalter 53, so beginnt die nächste Ablichtung genau an der Stelle, an welcher die vorhergehende Ablichtung geendet hat. Man erhält eine blattweise, lückenlose Ablichtung der Endlosvorlage.

Damit das Rücksetzen der Endlosvorlage nicht von Hand erfolgen muß, ist noch ein perforiertes Transportrad 74 vorgesehen, dessen Achse 78 an einem schwenkbaren Arm 75 gelagert ist und mit seinen Zacken 74 a in den in aller Regel perforierten Rand der Endlosvorlagen eingreift. Das Transportrad 74 wird über ein Antriebsrad 76 und eine Pese 77 von einem nicht dargestellten, ebenfalls von der zentralen Steuereinheit 55 gesteuerten Motor, im Falle des selbständigen Öffnens der Transportwalze um ein der Länge des Belichtungsfensters 35 a entsprechendes Stück zurückgedreht, sobald die Transportwalzen in der vorher geschilderten Weise von der zentralen Steuereinheit 55 bzw. vom Papierfühler 62 geöffnet wurden.

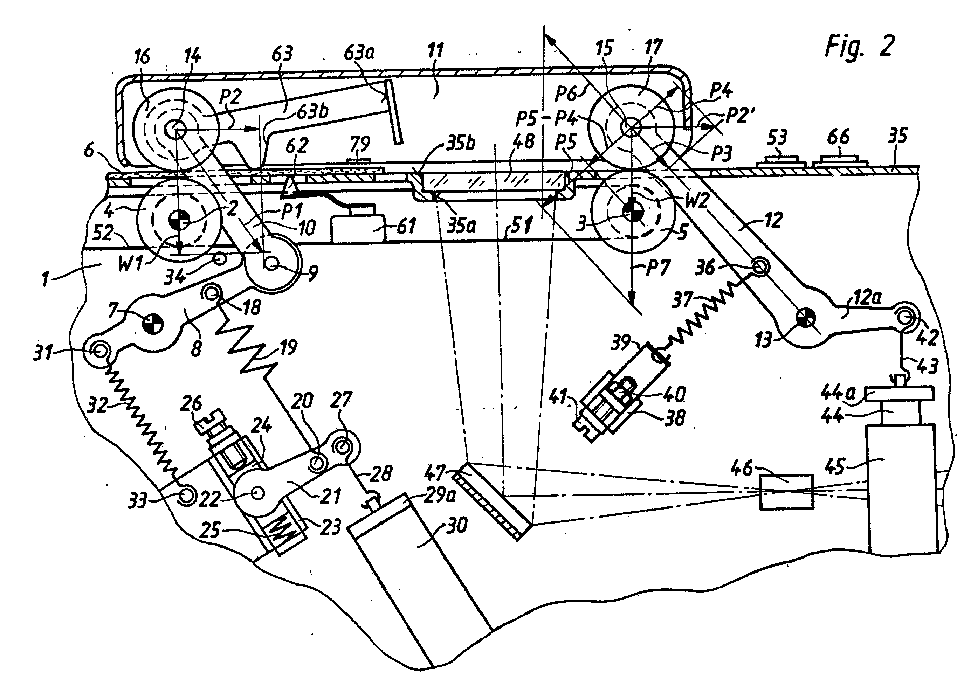

In Figur 2 sind die Transportwalzenpaare 4, 16 und 5, 17 im geschlossenen Zustand dargestellt. Dabei ist der Magnetanker 29 bis zu seinem Anschlag angezogen, während der Magnet 44, 45 stromlos ist. Die mittels der von dem Magneten 29, 30 gespannten Feder 19 parallel zur Kurbel 10 auf die Achse 14 wirkende Kraft $P_1$ wird dabei in eine senkrecht zur Vorlagenauflagefläche 35 wirkende Walzenandruckkraft $W_1$ und eine parallel zur Vorlagenauflagefläche 35 wirkende Verschiebungskraft $P_2$ zerlegt. Die zuletzt genannte Verschiebungskraft $P_2$ wirkt durch Vermittlung des Kopplungsgliedes 11 in gleicher Größe auch auf die Achse 17 als Verschiebungskraft $P_2'$. Sie erzeugt dort eine in Richtung der Kurbel 12 wirkende Reaktionskraft $P_3$ sowie eine senkrecht zur Kurbel wirkende Walzenabhebekraft $P_4$. Auf die Kurbel 12 wirkt aber bereits, ebenfalls senkrecht zur Kurbel und der Kraft $P_4$ entgegengerichtet, eine Walzenandruckkraft $P_5$, welche sich in eine parallel zur Kurbel 12 verlaufende Komponente $P_6$ sowie eine senkrecht zur Vorlagentransportebene 35 gerichtete Komponente $P_7$ zerlegen läßt. Aufgrund der gegeneinander gerichteten Wirkungen der Kräfte $P_4$ und $P_5$ verbleibt als tatsächliche senkrecht zur Vorlagentransportebene 35 gerichtete Walzenandruckkraft die aus Figur 2 ersichtliche Kraft $W_2$.

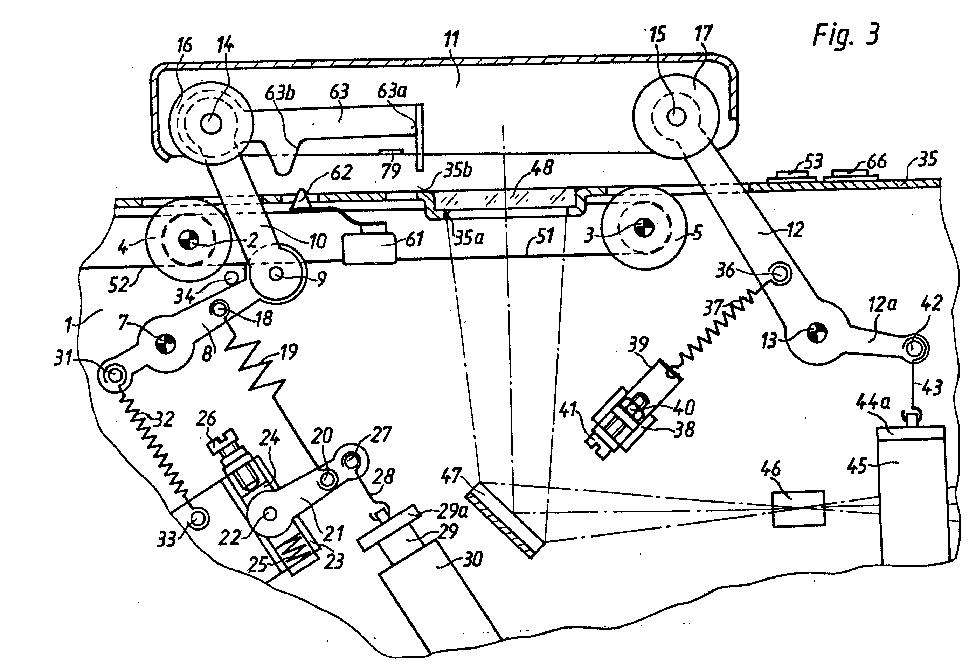

Figur 3 zeigt die geöffnete Stellung der Vorlagentransportwalzen. Dabei ist der Magnet 29, 30 stromlos und Feder 19 somit entspannt. Der Zuganker 44 des Magneten 45 ist bis zu seinem Anschlag angezogen. Dadurch wird die Kurbel 12 soweit im Uhrzeigersinn verschwenkt, daß außer der Walze 15 über das Koppelglied 11 auch die Walze 16 von ihrer Gegenwalze abgeschwenkt wird. Außerdem hebt der am Koppelglied angeordnete Anschlag 79 den Papieranschlag 63 a von der Vorlagentransportfläche 35 ab, so daß z.B. eine zu kopierende Endlosvorlage, frei über dem Belichtungsfenster 35 a verschoben werden kann.

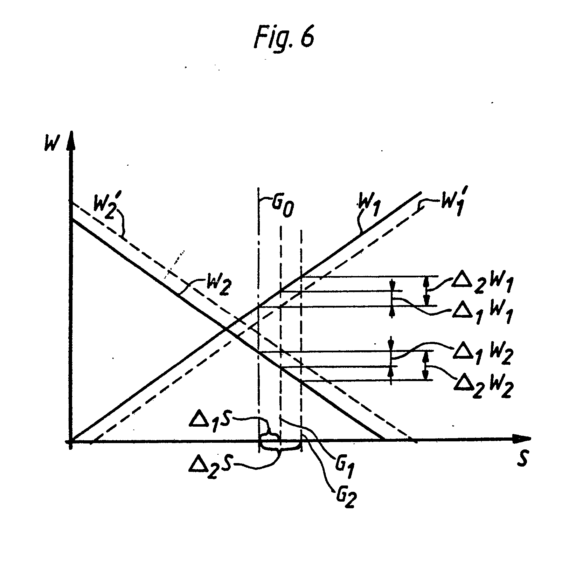

In Figur 6 ist der Zusammenhang zwischen der Andruckkraft $W_1$ der Einzugswalze und der Andruckkraft $W_2$ der Auszugswalze in Abhängigkeit vom Federweg S in Form eines Diagrammes dargestellt. Man sieht daraus, daß in der Nähe der durch eine strichpunktierte Linie angedeuteten Grundstellung $G_0$, in welcher bei-

de Walzen der Vorlagentransportebene 35 ohne Zwischenlage einer zu transportierenden Vorlage anliegen, beide Walzenandruckkräfte $W_1$ und $W_2$ etwa die gleiche Größe haben. Die Ausgangsgröße der Kräfte $W_1$ und $W_2$ läßt sich durch Verstellen der Stellschrauben 26 und 41 (Fig. 1) noch, wie z.B. durch die gestrichelten Linien $W_1'$ und $W_2'$ dargestellt, verändern. Wird nun die Grundstellung $G_0$ durch Einlaufen einer dünnen Vorlage unter die Einzugswalze in der durch die gestrichelte Linie $G_1$ wiedergegebenen Weise verändert, so wird die Feder 19 um einen zusätzlichen Federweg $\angle_1 S$ gespannt, wodurch sich die Andruckkraft $W_1$ um einen Betrag $\triangle_1 W_1$ erhöht. Damit wird aber die Andruckkraft $W_2$ selbsttätig um einen entsprechenden Betrag $\triangle_1 W_2$ reduziert.

Im Falle des Einlaufens einer dickeren Vorlage und Verschiebung der Grundstellung zur Linie $G_2$ tritt eine entsprechend größere Verschiebung der Andruckkräfte $W_1$ und $W_2$ um die Beträge $\triangle_2 W_1$ und $\triangle_2 W_2$ ein. Die Andruckkraft $W_2$ der Auszugswalze nähert sich immer mehr dem Wert Null und könnte, wie aus dem Diagramm gemäß Figur 6 leicht ersichtlich ist, ohne weiteres auch negative Werte annehmen. D. h., ab einer gewissen Vorlagendicke hebt die Auszugswalze 17 von der Vorlagentransportfläche 35 ab und erreicht ihr Kräftegleichgewicht erst wieder in einer Stellung, in welcher sie einen gewiseen Abstand von dieser Fläche hat. Durch entsprechende Wahl der Kurbelwinkel und der Ausgangsfederkräfte läßt es sich ohne weiteres einrichten, daß dieser Abstand etwa der Dicke der unter der Einzugswalze befindlichen Vorlage entspricht, so daß diese Vorlage praktisch ohne Einlaufstoß unter die Auszugswalze einläuft.

Das Diagramm gemäß Figur 6 entspricht dem Fall, in welchem beide Kurbeln 10 und 12 unter 45° angeordnet sind. Für andere Kurbelwinkel ergeben sich im Prinzip gleiche Verhältnisse. Die um die Beträge $\triangle W_2$ verkleinerte Andruckkraft $W_2$ würde dann allerdings nicht mehr auf der Ausgangslinie $W_2$ liegen.

In Figur 2 sind die Verhältnisse für jeweils auf die Kurbeln 10 und 12 wirkende Federn 19 und 37 dargestellt. Selbstverständlich könnten die Federkräfte ganz oder teilweise auch durch Gewichtskräfte ersetzt werden, wobei im Falle der Auszugswalze 15 diese Feder- oder Gewichtskräfte außer in einer zur Kurbel 12 senkrechten Richtung auch in einer zur Vorlagentransportebene 35 senkrechten Richtung an der Walzenachse 17 angreifen könnten.

Bei der Ausführungsform gemäß den Figuren 4 und 5 ist der Schwenkhebel 108, an welchem die von zwei Kurbelteilen gebildete Kurbel 10 für die Einzugswalze 16 angelenkt ist, mittels einer Zugstange 82 mit einem an einem Schwenkhebel 80 angeordneten Stift 81 verbunden. Am zweiten Arm des zweiarmigen Schwenkhebels 80 greift die Zugstange 28 des die Andruckfeder für die Einzugswalze spannden Magneten 29, 30 an. Die Einstellschraube 26 wirkt in diesem Fall auf die Achse 83 des Schwenkhebels 80.

Wie insbesondere aus Figur 5 hervorgeht ist der Schwenkhebel 108 in diesem Falle mittels Buchsen 108 a und 108 b sowie Stellschrauben 84 und 85 etwa in der Mitte der im wesentlichen über die gesamte Walzenanordnung reichenden Achsen 107 und 109 befestigt. Die von der Zugstange 82 auf den Schwenkhebel 108 übertragene Schwenkbewegung kann sich daher nur unter Verwindung dieser langen, federnden Achsen 107 und 109 auf die Kurbelteile 10a und 10b fortpflanzen. Die beiden mittels des Schwenkhebels 108 gegeneinander verwundenen Achsen 107 und 109 bilden dabei für die Einzugswalze 16, welche in diesem Falle in mehrere auf einer Achse aufgereihte Transportwalzen 16 a bis 16 c aufgegeilt ist, eine Andruckfeder von beliebig steiler Charakteristik.

**Patentansprüche**

1. Durchlaufkopiergerät, bei welchem die von Transportwalzenpaaren über ein streifenförmiges Belichtungsfenster geförderte Vorlage auf einen während der Belichtung mit der Transportgeschwindigkeit der Vorlage entsprechender Geschwindigkeit bewegten Aufzeichnungsträger abgebildet wird, mit einem vor dem Belichtungsfenster angeordneten Einzugswalzenpaar und einem nach dem Belichtungsfenster angeordneten Auszugswalzenpaar für die Vorlage, wobei die Transportwalzenpaare jeweils von einer gerätefest und einer beweglich gelagerten, in Arbeitsstellung unter Federoder Gewichtswirkung der gerätefest gelagerten Walze anliegenden Walze gebildet werden, dadurch gekennzeichnet, daß die Achsen (14, 15) der beweglichen Walzen (16, 17) des jeweiligen Walzenpaares (4, 16, 5, 17) jeweils die Koppelgelenke eines Viergelenkgetriebes mit der Vorlagentransportebene (35) etwa parallelem Koppelglied (11) bilden, daß die Kurbeln (10, 12) des Viergelenkgetriebes unter einem spitzen Winkel gegen die Einlaufrichtung (C) der Vorlage (6) geneigt sind, und daß an der Einzugswalze (16) eine im wesentlichen parallel zu der dieser Walze zugeordneten Kurbel (10) verlaufende Andruckkraft ($P_1$) für die Einzugswalze (16) angreift.

2. Kopiergerät nach Anspruch 1, dadurch gekennzeichnet, daß auf die Einzugswalze (16) mindestens eine Feder (19, 107, 109) einwirkt, deren Federcharakteristik einen ausreichend steilen Verlauf hat, um auf den durch das Einlaufen verschieden dicker Vorlagen (6) unter der Einzugswalze bedingten Unterschied im Federweg einen in der Größenordnung der Walzenandruckkraft, die dann vorhanden ist, wenn sich keine Vorlage unter der Einzugswalze befindet, liegenden Unterschied in der Federkraft zu erzeugen.

3. Kopiergerät nach Anspruch 1 oder 2, dadurch gekennzeichnet, daß die auf die Einzugswalze (16) wirkende Feder (19, 107, 109) mittels eines Betätigungsmagneten (29, 30) spannbar ist.

4. Kopiergerät nach einem der vorhergehenden Ansprüche, dadurch gekennzeichnet, daß die Kurbel (10) der Einzugswalze (16) an einem im wesentlichen senkrecht zu dieser Kurbel verlaufenden Schwenkhebel (8, 108) angelenkt ist, an welchem die die Andruckkraft für die Einzugswalze liefernde Feder (19, 107, 109) angreift.

5. Kopiergerät nach einem der vorhergehenden Ansprüche, dadurch gekennzeichnet, daß eine entgegen der Walzenandruckrichtung auf die Kurbel (10) bzw. auf den Schwenkhebel (8) einwirkende Rückholfeder (32) vorgesehen ist.

6. Kopiergerät nach einem der vorhergehenden Ansprüche, dadurch gekennzeichnet, daß ein die Abschwenkbewegung der Einzugswalze (16) begrenzender, mit dem Schwenkhebel (8, 108) zusammenwirkender Anschlag (1a, 34) vorgesehen ist.

7. Kopiergerät nach einem der Ansprüche 3 bis 6, dadurch gekennzeichnet, daß in die Kraftübertragungskette zwischen dem Betätigungsmagneten (29, 30) und der Kurbel (10) ein Übertragungshebel (21, 80) eingeschaltet ist, dessen Drehpunkt (22, 83) in einer zur Kraftübertragungsrichtung im wesentlichen parallelen Richtung verschiebbar ist, und an welchem die ankommende und die weiterzuleitende Kraft an verschiedenen Punkten des Hebels angreift.

8. Kopiergerät nach einem der Ansprüche 3 bis 7, dadurch gekennzeichnet, daß die Kurbel (10) der Einzugswalze (16) von zwei an den beiden Walzenenden angelenkten Kurbelteilen (10a, 10b) gebildet wird, und daß als Andruckfeder für die Einzugswalze (16) eine diese Kurbelteile verbindende Achse (109) dient, in deren Mitte der mittels des Betätigungsmagneten (29, 30) verschwenkbare Schwenkhebel (108) befestigt ist.

9. Kopiergerät nach Anspruch 8, dadurch gekennzeichnet, daß die Achse (107) des etwa in der Mitte zwischen den Kurbelteilen (10a, 10b) angeordneten Schwenkhebels (108) in Platinen (1) gelagert ist, welche etwa in der Ebene dieser Kurbelteile verlaufen.

10. Kopiergerät nach einem der Ansprüche 3 bis 9, dadurch gekennzeichnet, daß der die Andruckfeder (19, 107, 109) der Einzugswalze (16) spannende Elektromagnet (29, 30) in Abhängigkeit vom Kopierzyklus des Gerätes steuerbar ist.

11. Kopiergerät nach einem der vorhergehenden Ansprüche, dadurch gekennzeichnet, daß ein zwischen den Einzugswalzen (4, 16) und einem in Transportrichtung (C) der Vorlage (6) gesehen hinter de Einzugswalze liegenden Papieranschlag (63) angeordneter Papierfühler (62) den die Andruckfeder (19, 107, 109) spannenden Elektromagneten (29, 30) und ggf. auch den Kopierzyklus des Gerätes steuert.

12. Kopiergerät nach Anspruch 11, dadurch gekennzeichnet, daß der in die Transportbahn (35) der Vorlage (6) schwenkbare Papieranschlag (63) auf der Achse (14) der Einzugswalze (16) gelagert ist und durch Federkraft oder Gewichtswirkung mit einer zwischen seiner Lagerachse (14) und der Anschlagkante (63a) des Papieranschlages angeordneten Anschlagnase (63b) einem neben der Vorlage (6) liegenden Stück der Vorlagentransportbahn (35) aufliegt.

**Claims**

1. Continuous copying apparatus, in the case of which an image of the original which is conveyed by pairs of transport rollers across a strip-shaped exposure window is formed on a recording support which, during the exposure operation, moves at a speed corresponding to the speed of transport of the original, having a pair of intake rollers for the original arranged before the exposure window and a pair of removal rollers for the original arranged after the exposure window, each pair of transport rollers being formed by a roller secured to the apparatus and a roller which is mounted so that it can move and which, in the working position, lies, under the action of a spring or weight, adjacent the roller secured to the apparatus, characterised in that each of the shafts (14, 15) of the movable rollers (16, 17) of each pair of rollers (4, 16, 5, 17) forms, together with link member (11), which is approximately parallel to the plane (35) of transport of the original, the coupling link of a four-link mechanism, the cranks (10, 12) of the four-link mechanism are inclined at an acute angle towards the intake direction (C) of the original (6), and a pressure force ($P_1$) for the intake roller (16) running substantially parallel to the crank (10) associated with this roller acts on the intake roller (16).

2. Copying apparatus according to claim 1, characterised in that at least one spring (19, 107, 109) acts on the intake roller (16), the spring characteristic of which spring is sufficiently steep to produce, on the difference in the travel of the spring conditional on the intake under the intake roller of originals (6) of different thicknesses, a difference in the spring force lying in the order of magnitude of the roller pressure force which is present when there is no original under the intake roller.

3. Copying apparatus according to claim 1 or 2, characterised in that the spring (19, 107, 109) acting on the intake roller (16) can be tensioned by means of an actuating magnet (29, 30).

4. Copying apparatus according to one of the preceding claims, characterised in that the crank (10) of the intake roller (16) is articulated to a swivelling lever (8, 108) which runs substantially perpendicular to this crank and on which the spring (19, 107, 109) supplying the pressure force for the intake roller (16) acts.

5. Copying apparatus according to one of the preceding claims, characterised in that there is provided a restoring spring (32) which acts on the crank (10) or on the swivelling lever (8) against the direction of roller pressure.

6. Copying apparatus according to one of the preceding claims, characterised in that there is provided a stop (1*a*, 34) that limits the swivelling away of the intake roller (16) and cooperates with the swivelling lever (8, 108).

7. Copying apparatus according to one of claims 3 to 6, characterised in that there is connected into the force transmission chain between the actuating magnet (29, 30) and the crank (10) a transmission lever (21, 80), the pivotal point of which (22, 83) can be displaced in a direction that is substantially parallel to the direction of force transmission and on which the incoming force and the force which is to be transmitted act at different points of the lever.

8. Copying apparatus according to one of claims 3 to 7, characterised in that the crank (10) of the intake roller (16) is formed by two crank parts (10*a*, 10*b*) articulated to the two ends of the roller, and a shaft (109) connecting these crank parts serves as pressure spring for the intake roller (16), in the middle of which shaft there is secured the swivelling lever (108) which can be swivelled by means of the actuating magnet (29, 30).

9. Copying apparatus according to claim 8, characterised in that the shaft (107) of the swivelling lever (108) arranged approximately in the middle between the crank parts (10*a*, 10*b*) is mounted in flat bars (1) which run approximately in the plane of these crank parts.

10. Copying apparatus according to one of claims 3 to 9, characterised in that the electromagnet (29, 30) tensioning the pressure spring (19, 107, 109) of the intake roller (16) can be controlled in dependence on the copying cycle of the apparatus.

11. Copying apparatus according to one of the preceding claims, characterised in that a paper feeler (62) arranged between the intake rollers (4, 16) and a paper stop (63) lying behind the intake roller with respect to the direction of transport (C) of the original (6) controls the electromagnet (29, 30) tensioning the pressure spring (19, 107, 109) and, if necessary, also the copying cycle of the apparatus.

12. Copying apparatus according to claim 11, characterised in that the paper stop (63) that can be swivelled into the transport path (35) of the original (6) is mounted on the shaft (14) of the intake roller (16) and, owing to the force of a spring or the action of a weight, rests with a stop nose 63*b* which is arranged between its bearing shaft (14) and the stop edge (63*a*) of the paper stop on a portion of the transport path of the original lying adjacent the original.

## Revendications

1. Photocopieur en continu, dans lequel l'original, déplacé par des paires de cylindres de transport sur une fenêtre d'exposition en forme de bande, est reproduit sur un support d'enregistrement déplacé pendant l'exposition à une vitesse qui correspond à la vitesse de transport de l'original, avec une paire de cylindres d'alimentation disposée devant la fenêtre d'exposition et une paire de cylindres d'évacuation pour l'original, disposée après la fenêtre d'exposition, les paires de cylindres de transport étant respectivement formées par un cylindre solidaire du photocopieur et par un cylindre monté de façon mobile et portant, dans la position de travail, sous l'action d'un ressort du poids, contre le cylindre solidaire du photocopieur, caractérisé par le fait que les axes (14, 15) des cylindres mobiles (16, 17) de la paire de cylindres concernée (4, 16, 5, 17) forment les articulations de liaison d'une transmission à quatre articulations avec l'organe de liaison (11) à peu près parallèle au plan de transport des originaux (35), que les manivelles (10, 12) de la transmission à quatre articulations sont inclinées sous un angle aigu sur la direction d'entrée (C) de l'original (6), et que le cylindre d'alimentation (16) est attaqué par un force d'application $(P_1)$ pour celles-ci, qui s'étend pour l'essentiel parallèlement à la manivelle (11) associée au cylindre d'alimentation.

2. Photocopieur selon la revendication 1, caractérisé par le fait que sur le cylindre d'alimentation (16) agit au moins un ressort (19, 107, 109) dont la caractéristique d'élasticité comporte une allure suffisamment raide pour produire, par suite de la différence de la course élastique due au passage d'originaux (6) d'épaisseurs différentes sous le cylindre d'alimentation, une différence de la force du ressort, se situant dans l'ordre de grandeur de la force d'application du cylindre qui existe lorsqu'aucun original ne se trouve sous le cylindre d'alimentation.

3. Photocopieur selon la revendication 1 ou 2, caractérisé par le fait que le ressort (19, 107, 109) qui agit sur le cylindre d'alimentation (16) est susceptible d'être armé au moyen d'un aimant de commande (29, 30).

4. Photocopieur selon l'une des revendications antérieures, caractérisé par le fait que la manivelle (10) du cylindre d'alimentation (16) est articulée sur un levier basculant (8, 108) qui s'étend essentiellement en direction verticale par rapport à cette manivelle et qui est attaquée par le ressort (19, 107, 109) qui fournit la force d'application pour le cylindre d'alimentation.

5. Photocopieur selon l'une des revendications antérieures, caractérisé par le fait qu'il est prévu un ressort de rappel (32) qui agit sur la manivelle (10) ou sur le levier basculant (8), à

**0 010 604**

l'encontre de la direction de l'application du cylindre.

6. Photocopieur selon l'une des revendications antérieures, caractérisé par le fait qu'il est prévu une butée (1a, 34) qui limite le mouvement de basculement du cylindre d'alimentation (16) et qui coagit avec le levier basculant (8, 108).

7. Photocopieur selon l'une des revendications 3 à 6, caractérisé par le fait que dans la voie de transmission de la force entre l'aimant de commande (29, 30) et la manivelle (10), est monté un levier de transmission (21, 80) dont le point d'articulation (22, 83) est susceptible d'être déplacé suivant une direction qui est essentiellement parallèle à la direction de la transmission de la force, et qui est appliqué en différents points du levier par la force d'attaque et par la force à transmettre.

8. Photocopieur selon l'une des revendications 3 à 7, caractérisé par le fait que la manivelle (10) du cylindre d'alimentation (16) est constituée par deux éléments de manivelle (10a, 10b) articulés aux deux extrémités du cylindre, et que comme ressort d'application pour le cylindre d'alimentation (16) sert un axe (109) qui relie ces éléments de manivelle et au milieu duquel est fixé le levier basculant (108) qui est susceptible de basculer à l'aide de l'aimant de commande (29, 30).

9. Photocopieur selon la revendication 8, caractérisé par le fait que l'axe (107) du levier basculant (108) qui est disposé à peu près au milieu entre les deux éléments de manivelle (10a, 10b), est monté dans des platines (1) qui s'étandent à peu près dans le plan de ces éléments de manivelle.

10. Photocopieur selon l'une des revendications 3 à 9, caractérisé par le fait que l'électroaimant (29, 30) qui arme le ressort de force d'application (19, 107, 109) du cylindre d'alimentation (16), est susceptible d'être commandé en fonction du cycle de tirage de l'appareil.

11. Photocopieur selon l'une des revendications antérieures, caractérisé par le fait qu'un détecteur de papier (62) qui est dieposé entre les cylindres d'alimentation (4, 16) et une butée de papier (63) qui se trouve derrière le cylindre d'alimentation, si l'on regarde dans la direction de transport (C) de l'original (6), commande l'électroaimant (29, 30) qui arme le ressort de force d'application (19, 107, 109) et éventuellement également le cycle de tirage de l'appareil.

12. Photocopieur selon la revendication 11, caractérisé par le fait que la butée de papier (63) qui est susceptible de basculer dans la trajectoire de transport (35) de l'original (6) est montée sur l'axe (14) du cylindre d'alimentation (16) et repose, sous l'effet de la force d'un ressort ou sous l'effet de la gravité, et par un bec de butée (63b) disposé entre son axe d'articulation (14) et l'arête de butée (63a) de la butée de papier, sur une partie du transport des originaux (35), qui se situe près de l'original.

Fig. 1

Fig. 2

Fig. 3

*Fig. 4*

*Fig. 5*

*Fig. 6*